# EUROPEAN PATENT APPLICATION

(11) **EP 1 544 735 A2**
(43) Date of publication of application: **22.06.2005**
(21) Application number: 04257684.3
(22) Date of filing: 10.12.2004
(51) Int. Cl.: G06F 9/46

(54) **Method and system of accessing a target file in a computer system with an operating system with file locking implemented at file-open time**

(30) Priority: 15.12.2003 US 737581
(71) Applicant: International Business Machines Corporation, Armonk, N.Y. 10504 (US)
(72) Inventor: Reed, Benjamin, Winchester Hampshire SO21 2JN (GB); Smith, Mark, Winchester Hampshire SO21 2JN (GB)
(74) Representative: Ling, Christopher John

(57) **Abstract**

The present invention provides a method and system of accessing at least one target file in a computer system with an operating system with file locking implemented at file-open time. In an exemplary embodiment, the method and system include (1) obtaining a set of handles that corresponds to a set of all files that are open in the computer system, (2) determining within the kernel of the operating system a set of file identifiers that corresponds to the set of handles, (3) identifying from the set of file identifiers a file identifier that corresponds to the target file, (4) sending within the kernel to the file system driver of the operating system a read request packet that corresponds to the identified file identifier, and (5) receiving from the file system driver data that corresponds to the target file.

## Description

### Technical field

The present invention relates to operating systems, and particularly relates to a method and system of accessing at least one target file in a computer system with an operating system with file locking implemented at file-open time.

### Background art

Operating system kernels and programs can have the ability to protect files from being opened and read by other processes. This is done by opening a file and not granting specific permissions (such as read) to other processes. As long as this process holds the file open, other processes are subject to the permissions granted by this process. Attempts to open such a file by other processes will result in Windows "sharing violations", and the data in the file cannot be read. An example of such an operating system and programs is the Microsoft Windows (hereinafter "Windows") kernel and Windows programs (Windows is a trademark of Microsoft Corporation).

### Need to Access Open Files

However, the data in these files can be extremely important to many applications, especially backup applications. For example, it is important for backup applications to be able to read and backup every file on a machine. In addition, some of these protected files are files containing registry information and are therefore necessary for the correct operation of a restored backup image.

### Prior Art Systems

Currently, backup applications take one of two approaches to get around this problem.

### Sector-Wise Copy

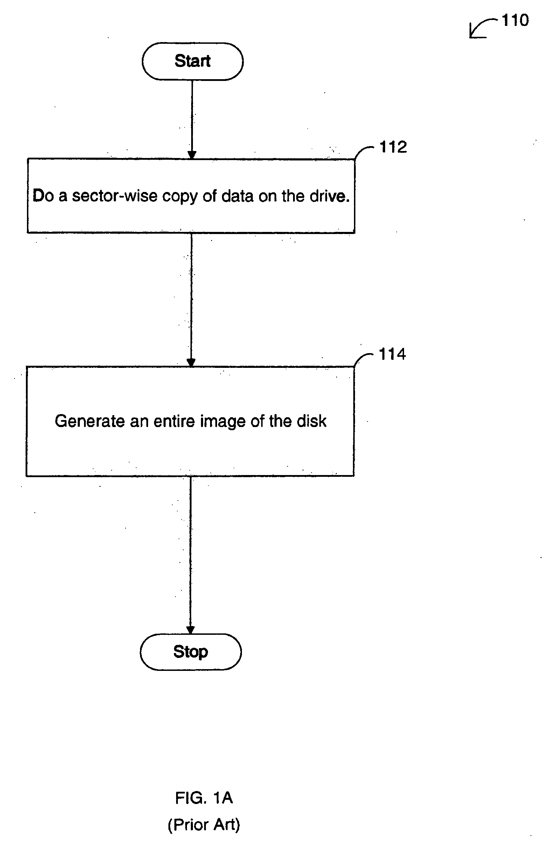

In the first prior art approach, as shown in prior art Figure 1A, an application would (1) do a sector-wise copy of data on the drive, as step 112, and (2) generate an entire image of the disk, as step 114. Unfortunately, this method produces a monolithic copy of the drive. In addition, this technique produces a disk image in which it is difficult to locate the sectors of an individual file. This makes a "single file restore" from this image very difficult.

### Shutdown and Preboot

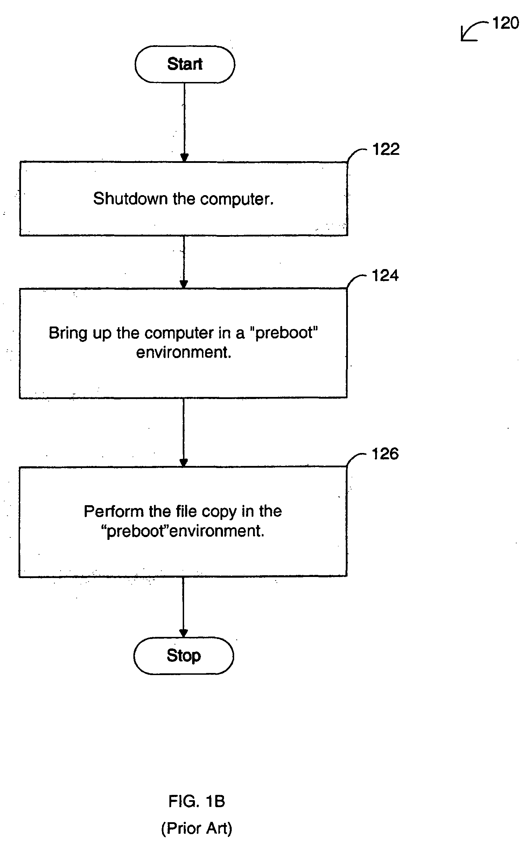

The second prior art approach that applications use, as shown in prior art Figure 1B, is to (1) shutdown the machine, as step 122, and (2) bring it up in a "preboot" environment, as step 124, where the (3) file copy can be performed, as step 126. The machine is either rebooted again, or finishes booting to Windows. This method is poor because it requires a reboot to be able to copy these files. In addition, a backup while the machine is running is impossible.

Therefore, a method and system of accessing at least one target file in a computer system with an operating system with file locking implemented at file-open time is needed.

### Disclosure of the invention

The present invention provides a method and system of accessing at least one target file in a computer system with an operating system with file locking implemented at file-open time. In an exemplary embodiment, the method and system include (1) obtaining a set of handles that corresponds to a set of all files that are open in the computer system, (2) determining within the kernel of the operating system a set of file identifiers that corresponds to the set of handles, (3) identifying from the set of file identifiers a file identifier that corresponds to the target file, (4) sending within the kernel to the file system driver of the operating system a read request packet that corresponds to the identified file identifier, and (5) receiving from the file system driver data that corresponds to the target file.

In an exemplary embodiment, the obtaining includes (a) issuing an NtQuerySystemlnformation to the kernel, where the NtQuerySystemlnformation asks for all information about each handle in the set of handles, and (b) obtaining from the kernel an array of SYSTEM_HANDLE_INFORMATION for each handle in the set of handles, where the SYSTEM_HANDLE_INFORMATION includes a pointer to a FILE_OBJECT, where the FILE_OBJECT includes file identifier information.

In an exemplary embodiment, the determining includes, for each handle in the set of handles, passing a pointer to the FILE_OBJECT corresponding to the each handle to the kernel. In a further embodiment, the determining includes, for the each handle in the set of handles, outputting from within the kernel a file identifier corresponding to the passed FILE_OBJECT.

In an exemplary embodiment, the identifying includes identifying the FILE _OBJECT corresponding to the identified file identifier that corresponds to the target file.

In an exemplary embodiment, the sending includes (a) passing the identified FILE_OBJECT to the kernel and (b) requesting from the kernel a reading of data from the target file corresponding to the identified FILE_OBJECT via the read request packet, where the read request packet includes an Interrupt Request Packet (IRP). In a further embodiment, the requesting includes (i) generating within the kernel an IRP corresponding to the identified FILE_OBJECT at a certain offset and a certain length and (ii) passing the IRP to the file system driver of the operating system.

In an exemplary embodiment, the receiving includes (a) receiving within the kernel from the file system driver the data from the target file corresponding to the identified FILE_OBJECT and (b) obtaining the data from the target file corresponding to the identified FILE_OBJECT from the kernel.

In an exemplary embodiment, the method and system include (1) obtaining a set of handles that corresponds to a set of all files that are open in the computer system, (2) determining within the kernel of the operating system a set of file identifiers that corresponds to the set of handles, (3) identifying from the set of file identifiers a file identifier that corresponds to the target file, and (4) sending within the kernel to the file system driver of the operating system a read request packet that corresponds to the identified file identifier.

The present invention also provides a computer program product usable with a programmable computer having readable program code embodied therein of accessing at least one target file in a computer system with an operating system with file locking implemented at file-open time. In an exemplary embodiment, the computer program product includes (1) computer readable code for obtaining a set of handles that corresponds to a set of all files that are open in the computer system, (2) computer readable code for determining within the kernel of the operating system a set of file identifiers that corresponds to the set of handles, (3) computer readable code for identifying from the set of file identifiers a file identifier that corresponds to the target file, (4) computer readable code for sending within the kernel to the file system driver of the operating system a read request packet that corresponds to the identified file identifier, and (5) computer readable code for receiving from the file system driver data that corresponds to the target file.

In an exemplary embodiment, the computer program product includes (1) computer readable code for obtaining a set of handles that corresponds to a set of all files that are open in the computer system, (2) computer readable code for determining within the kernel of the operating system a set of file identifiers that corresponds to the set of handles, (3) computer readable code for identifying from the set of file identifiers a file identifier that corresponds to the target file, and (4) computer readable code for sending within the kernel to the file system driver of the operating system a read request packet that corresponds to the identified file identifier.

### Brief description of the drawings

Figure 1A is a flowchart of a prior art technique.

Figure 1B is a flowchart of a prior art technique.

Figure 2 is a flowchart in accordance with an exemplary embodiment of the present invention.

Figure 3 is a flowchart of the obtaining step of Figure 2 in accordance with an exemplary embodiment of the present invention.

Figure 4A is a flowchart of the determining step of Figure 2 in accordance with an exemplary embodiment of the present invention.

Figure 4B is a flowchart of the determining step of Figure 2 in accordance with a further embodiment of the present invention.

Figure 5 is a flowchart of the identifying step of Figure 2 in accordance with an exemplary embodiment of the present invention.

Figure 6A is a flowchart of the sending step of Figure 2 in accordance with an exemplary embodiment of the present invention.

Figure 6B is a flowchart of the sending step of Figure 2 in accordance with a further embodiment of the present invention.

Figure 7 is a flowchart of the receiving step of Figure 2 in accordance with an exemplary embodiment of the present invention.

### Best mode for carrying out the invention

The present invention provides a method and system of accessing at least one target file in a computer system with an operating system with file locking implemented at file-open time. In an exemplary embodiment, the present invention provides a method and system of reading the contents of protected files while the operating system remains running. The exemplary embodiment describes a method and system of reading the contents of protected Windows files while the Windows operating system remains running, although the invention is not restricted to Windows files and the Windows operating system. The present invention provides a method and system of accessing at least one target file in a computer system with an operating system with file locking implemented at file-open time. In an exemplary embodiment, the method and system include (1) obtaining a set of handles that corresponds to a set of all files that are open in the computer system, (2) determining within the kernel of the operating system a set of file identifiers that corresponds to the set of handles, (3) identifying from the set of file identifiers a file identifier that corresponds to the target file, (4) sending within the kernel to the file system driver of the operating system a read request packet that corresponds to the identified file identifier, and (5) receiving from the file system driver data that corresponds to the target file.

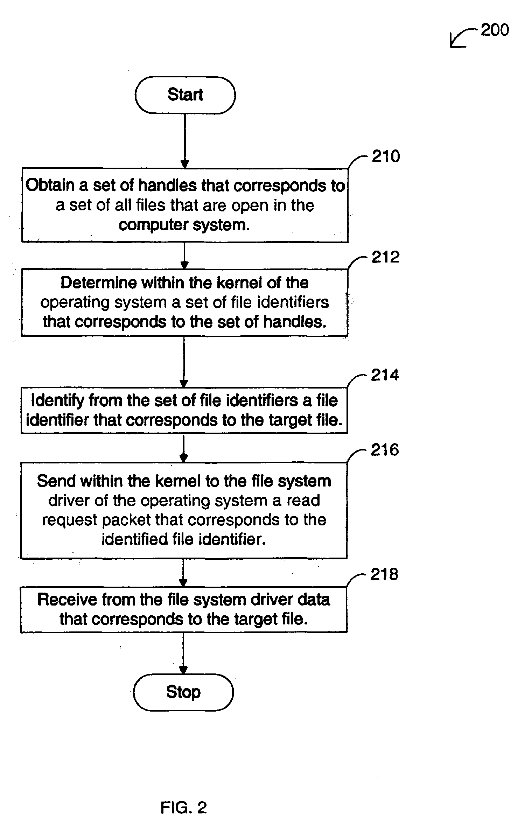

Referring to Figure 2, in an exemplary embodiment, the present invention includes a step 210 of obtaining a set of handles that corresponds to a set of all files that are open in the computer system, a step 212 of determining within the kernel of the operating system a set of file identifiers that corresponds to the set of handles, a step 214 of identifying from the set of file identifiers a file identifier that corresponds to the target file, a step 216 of sending within the kernel to the file system driver of the operating system a read request packet that corresponds to the identified file identifier, and a step 218 of receiving from the file system driver data that corresponds to the target file.

### General

The present invention reads protected Windows files via two programs which work in tandem, sending data back and forth between each other. At a high level, one of these programs (e.g. wam.sys) runs in the kernel and does the actual reading, while the other program (e.g. bam.exe) runs in user space, deduces information about the file, passes that information to the kernel program in order to give it enough information to know where to read. The kernel program then returns the read data back to the user level program.

### Obtaining a Set of Handles

Specifically, the user level program issues an NtQuerySystemlnformation call to the kernel asking for all information about open file handles. The NtQuerySystemlnformation function retrieves various kinds of system information. This function is documented in various documents originating from Microsoft Corp. Including the msdn Library at http://www.msdn.microsoft.com. The value SYSTEM_HANDLE_INFORMATION, indicating the kind of system information to be retrieved, is used as the parameter to the call. This means that the call will return an array of SYSTEM_HANDLE_INFORMATION structures for each open handle in the kernel. Each SYSTEM_HANDLE_INFORMATION structure has the following layout.

typedef struct _SYSTEM_HANDLE_INFORMATION {

ULONG NumberOfHandles;

SYSTEM_HANDLE_TABLE_ENTRY_INFO Handles[ 1 ];

} SYSTEM_HANDLE_INFORMATION,
*PSYSTEM_HANDLE_INFORMATION;

Each of the SYSTEM_HANDLE_TABLE_ENTRY_INFO arrays has the following layout.

typedef struct _SYSTEM_HANDLE_TABLE_ENTRY_INFO {

ULONG UniqueProcessld;

UCHAR ObjectTypelndex;

UCHAR HandleAttributes;

USHORT HandleValue;

PVOID Object;

ACCESS_MASH GrantedAccess;

} SYSTEM_HANDLE_TABLE_ENTRY_INFO,
*PSYSTEM_HANDLE_TABLE_ENTRY_INFO;

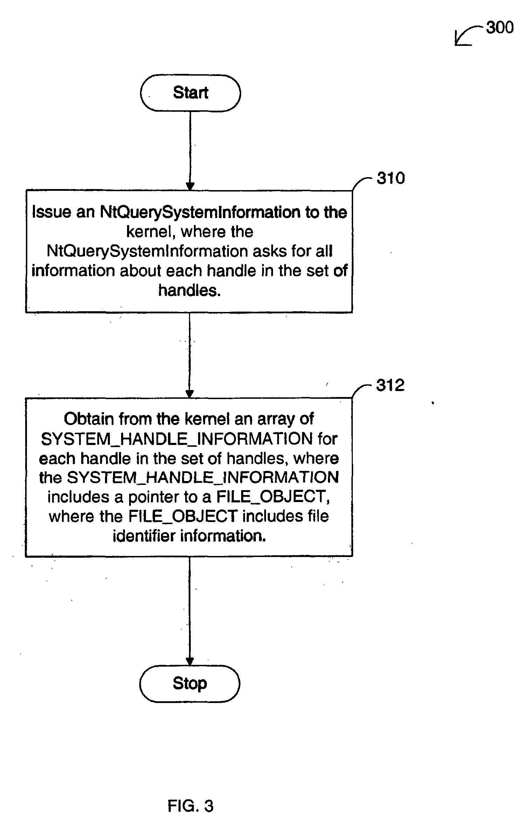

Referring to Figure 3, in an exemplary embodiment, obtaining step 210 includes a step 310 of issuing an NtQuerySystemlnformation to the kernel, where the NtQuerySystemlnformation asks for all information about each handle in the set of handles, and a step 312 of obtaining from the kernel an array of SYSTEM_HANDLE_INFORMATION for each handle in the set of handles, where the SYSTEM_HANDLE_INFORMATION includes a pointer to a FILE_OBJECT, where the FILE_OBJECT includes file identifier information.

### Determining a Set of File Identifiers Corresponding to the Set of Handles

However, a correspondence between file handles and filenames is still needed. Finding out which handle is a handle for the target file is still needed. One piece of information in this SYSTEM_HANDLE_INFORMATION is a pointer (PVOID Object) to a FILE_OBJECT. FILE_OBJECTs contain filename information. However, the memory storing FILE_OBJECTs can only be used in the kernel.

Therefore, the user level program passes a pointer to this memory into the kernel level program. Then, the kernel level program passes back out the filename that this FILE_OBJECT describes.

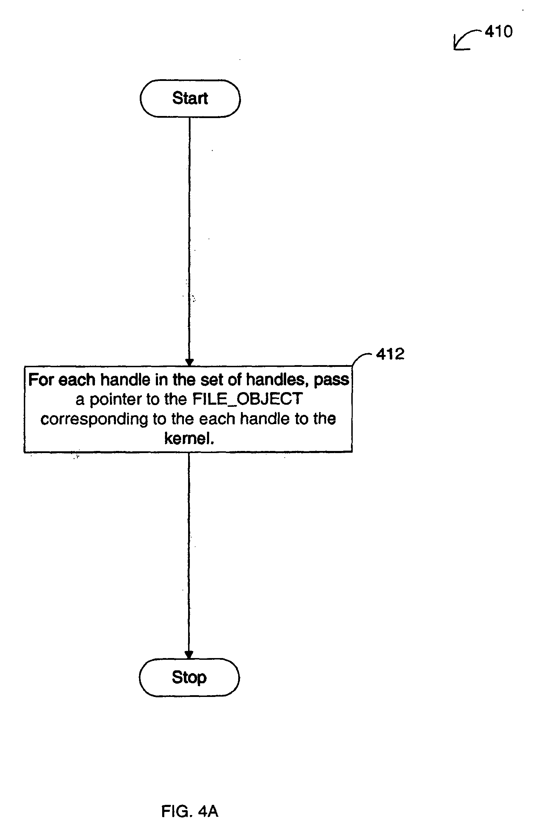

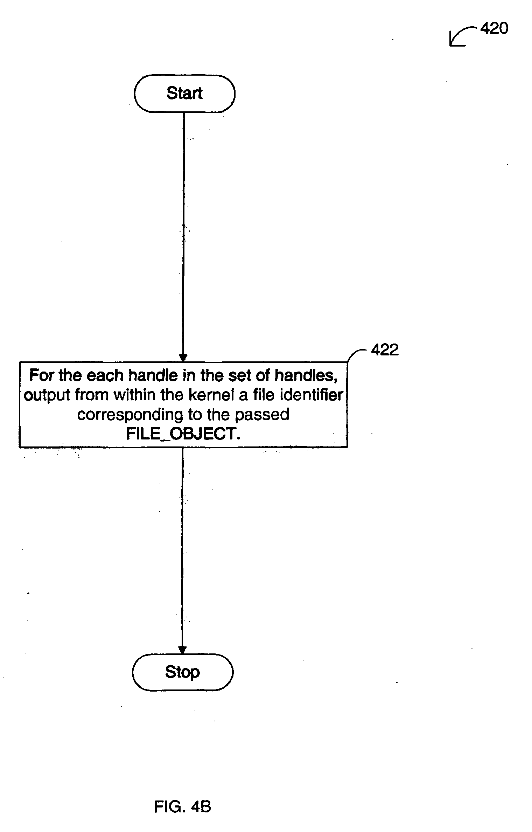

Referring to Figure 4A, in an exemplary embodiment, determining step 212 includes a step 412 of, for each handle in the set of handles, passing a pointer to the FILE_OBJECT corresponding to the each handle to the kernel. In a further embodiment, as shown in Figure 4B, determining step 212 further includes, for the each handle in the set of handles, a step 422 of outputting from within the kernel a file identifier corresponding to the passed FILE_OBJECT.

### Identifying a File Identifier Corresponding to the Target File

The user level program continues to perform this way until the filename it is looking for is returned from the kernel. It now has a handle to the protected file, the target file, that is desired to be read. Essentially, a file open has been performed.

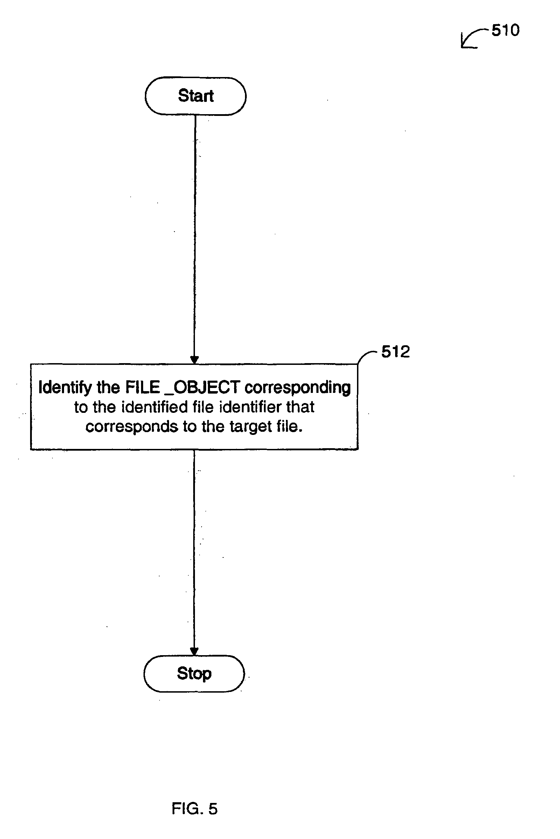

Referring to Figure 5, in an exemplary embodiment, identifying step 214 includes a step 512 of identifying the FILE _OBJECT corresponding to the identified file identifier that corresponds to the target file.

### Sending a Read Request Packet

It should be possible to read directly using a handle in user space.
However, this handle is still constrained by the permissions that the original protecting process had placed upon it, and an attempted read on this handle would generate a sharing violation.

Therefore, the kernel level program passes this FILE_OBJECT back into the kernel program and asks it to read data from the file described by this FILE_OBJECT at a certain offset and a PAGE_SIZE (usually 4096 bytes) length. Simply issuing a ZwReadFile from the kernel also fails with a sharing violation for the reasons described above.

Data from this file is extracted through generating an Interrupt Request Packet (IRP) in the kernel and passing it down to the underlying filesystem (NTFS, FAT32, etc) where this FILE_OBJECT resides.

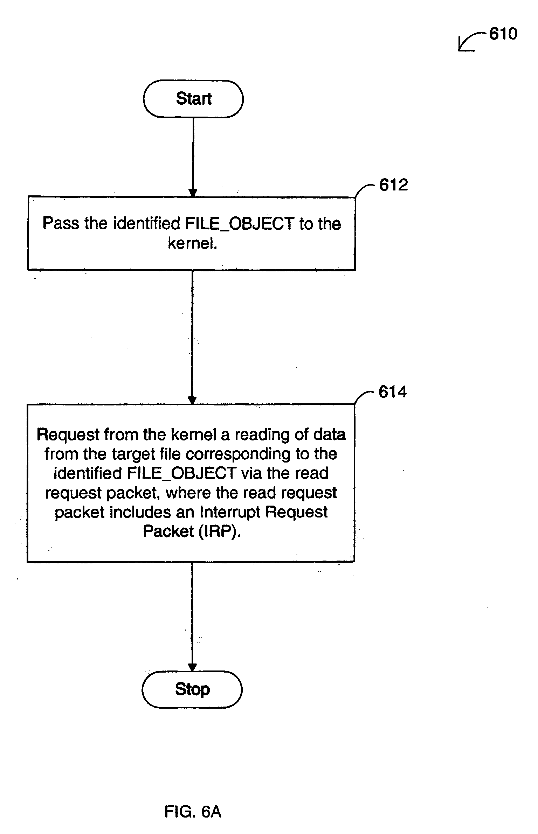

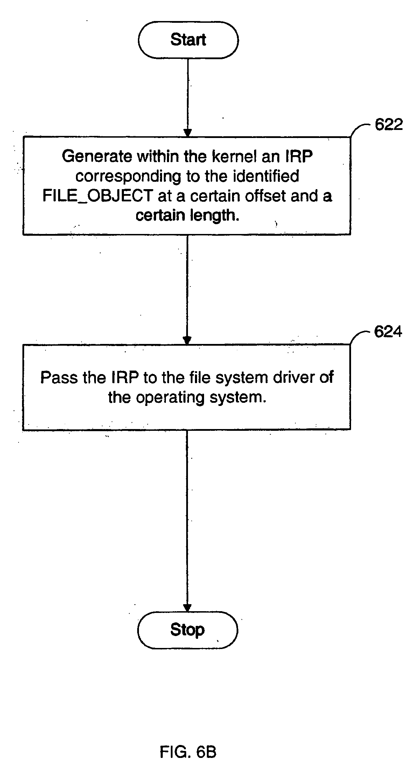

Referring to Figure 6A, in an exemplary embodiment, sending step 216 includes a step 612 of passing the identified FILE_OBJECT to the kernel and a step 614 of requesting from the kernel a reading of data from the target file corresponding to the identified FILE_OBJECT via the read request packet, where the read request packet includes an Interrupt Request Packet (IRP). In a further embodiment, as shown in Figure 6B, requesting 614 includes a step 622 of generating within the kernel an IRP corresponding to the identified FILE_OBJECT at a certain offset and a certain length and a step 624 of passing the IRP to the file system driver of the operating system.

### Receiving Data Corresponding to the Target File

The filesystem responds with the requested data, and the kernel program passes that data back up to user space. A read has been performed on a protected file. Repeating these reads at different offsets until the end of the file is reached will yield a perfect copy of the data for this file on disk.

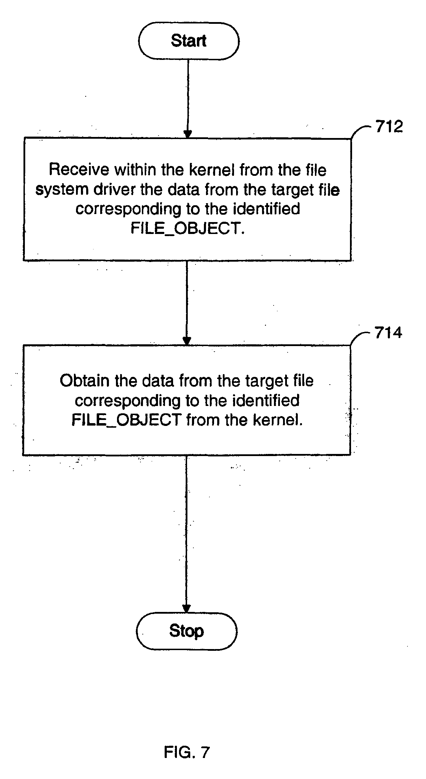

Referring to Figure 7, in an exemplary embodiment, receiving step 218 includes a step 712 of receiving within the kernel from the file system driver the data from the target file corresponding to the identified FILE_OBJECT and a step 714 of obtaining the data from the target file corresponding to the identified FILE_OBJECT from the kernel.

## Claims

1. A method of accessing at least one target file in a computer system with an operating system with file locking implemented at file-open time, the method comprising: obtaining (210) a set of handles that corresponds to a set of all files that are open in the computer system; determining (212) within the kernel of the operating system a set of file identifiers that corresponds to the set of handles; identifying (214) from the set of file identifiers a file identifier that corresponds to the target file; and sending (216) within the kernel to the file system driver of the operating system a read request packet that corresponds to the identified file identifier.

2. The method of claim 1, further comprising the step of: receiving (218) from the file system driver data that corresponds to the target file.

3. The method of claim 1 or claim 2 wherein the obtaining comprises: issuing (310) an NtQuerySystemlnformation to the kernel, wherein the NtQuerySystemlnformation asks for all information about each handle in the set of handles; and obtaining (312) from the kernel an array of SYSTEM_HANDLE_INFORMATION for each handle in the set of handles, wherein the SYSTEM_HANDLE_INFORMATION comprises a pointer to a FILE_OBJECT, wherein the FILE_OBJECT comprises file identifier information.

4. The method of claim 3 wherein the determining (212) comprises: for each handle in the set of handles, passing (412) a pointer to the FILE_OBJECT corresponding to the each handle to the kernel.

5. The method of claim 4 wherein the determining (212) further comprises: for the each handle in the set of handles, outputting (422) from within the kernel a file identifier corresponding to the passed FILE_OBJECT.

6. The method of claim 5 wherein the identifying (214) comprises: identifying (512) the FILE _OBJECT corresponding to the identified file identifier that corresponds to the target file.

7. The method of claim 6 wherein the sending comprises: passing (612) the identified FILE_OBJECT to the kernel; and requesting (614) from the kernel a reading of data from the target file corresponding to the identified FILE_OBJECT via the read request packet, wherein the read request packet comprises an Interrupt Request Packet (IRP).

8. The method of claim 7 wherein the requesting (614) comprises: generating (622) within the kernel an IRP corresponding to the identified FILE_OBJECT at a certain offset and a certain length; and passing (624) the IRP to the file system driver of the operating system.

9. The method of claim 8 wherein the receiving (218) comprises: receiving (712) within the kernel from the file system driver the data from the target file corresponding to the identified FILE_OBJECT; and obtaining (714) the data from the target file corresponding to the identified FILE_OBJECT from the kernel.

10. A system of accessing at least one target file in a computer system with an operating system with file locking implemented at file-open time, the system comprising: an obtaining module configured to obtain (210) a set of handles that corresponds to a set of all files that are open in the computer system; a determining module configured to determine (212) within the kernel of the operating system a set of file identifiers that corresponds to the set of handles; an identifying module configured to identify (214) from the set of file identifiers a file identifier that corresponds to the target file; and a sending module configured to send (216) within the kernel to the file system driver of the operating system a read request packet that corresponds to the identified file identifier.

11. The system of claim 10, further comprising: a receiving module configured to receive (218) from the file system driver data that corresponds to the target file.

12. The system of claim 10 or claim 11 wherein the obtaining module comprises: an issuing module configured to issue (310) an NtQuerySystemlnformation to the kernel, wherein the NtQuerySystemlnformation asks for all information about each handle in the set of handles; and an obtaining module configured to obtain (312) from the kernel an array of SYSTEM_HANDLE_INFORMATION for each handle in the set of handles, wherein the SYSTEM_HANDLE_INFORMATION comprises a pointer to a FILE_OBJECT, wherein the FILE_OBJECT comprises file identifier information.

13. The system of claim 12 wherein the determining module comprises: for each handle in the set of handles, a passing module configured to pass (412) a pointer to the FILE_OBJECT corresponding to the each handle to the kernel.

14. The system of claim 13 wherein the determining module further comprises: for the each handle in the set of handles, an outputting module configured to output (422) from within the kernel a file identifier corresponding to the passed FILE_OBJECT.

15. The system of claim 13 wherein the identifying module comprises: an identifying module configured to identify (512) the FILE _OBJECT corresponding to the identified file identifier that corresponds to the target file.

16. The system of claim 15 wherein the sending module comprises: a passing module configured to pass (612) the identified FILE_OBJECT to the kernel; and a requesting module configured to request (614) from the kernel a reading of data from the target file corresponding to the identified FILE_OBJECT via the read request packet, wherein the read request packet comprises an Interrupt Request Packet (IRP).

17. The system of claim 16 wherein the requesting module comprises: a generating module configured to generate (622) within the kernel an IRP corresponding to the identified FILE_OBJECT at a certain offset and a certain length; and a passing module configured to pass (624) the IRP to the file system driver of the operating system.

18. The system of claim 17 wherein the receiving module comprises: a receiving module configured to receive (712) within the kernel from the file system driver the data from the target file corresponding to the identified FILE_OBJECT; and an obtaining module configured to obtain (714) the data from the target file corresponding to the identified FILE_OBJECT from the kernel.

19. A computer program comprising computer program code means adapted to perform the steps of any one of claim 1 to claim 9.
